Europäisches Patentamt

European Patent Office

Office européen des brevets

(19)

(11) **EP 0 898 765 B1**

(12) **FASCICULE DE BREVET EUROPEEN**

(45) Date de publication et mention
de la délivrance du brevet:
**21.04.2004 Bulletin 2004/17**

(51) Int Cl.[7]: **G06T 5/00**

(86) Numéro de dépôt international:
**PCT/FR1998/000278**

(21) Numéro de dépôt: **98908184.9**

(22) Date de dépôt: **13.02.1998**

(87) Numéro de publication internationale:
**WO 1998/036380 (20.08.1998 Gazette 1998/33)**

(54) **PROCEDE DE CORRECTION DU FLUX DIFFUSE DANS DES IMAGES DE RADIOGRAPHIE NUMERIQUE**

**VERFAHREN ZUM KORRIGIEREN DES STREUFLUSSES IN DIGITALEN RADIOGRAFISCHEN DARSTELLUNGEN**

**METHOD FOR CORRECTING THE SCATTERED FLUX IN DIGITAL RADIOGRAPHY IMAGES**

(84) Etats contractants désignés:
**DE FR GB IT**

(30) Priorité: **17.02.1997 FR 9701810**

(43) Date de publication de la demande:
**03.03.1999 Bulletin 1999/09**

(73) Titulaire: **COMMISSARIAT A L'ENERGIE ATOMIQUE**
**75015 Paris (FR)**

(72) Inventeurs:
• **DARBOUX, Michel**
**F-38000 Grenoble (FR)**
• **DINTEN, Jean-Marc**
**F-69008 Lyon (FR)**

(74) Mandataire: **Audier, Philippe André et al**
**Brevalex,**
**3, rue du Docteur Lancereaux**
**75008 Paris (FR)**

(56) Documents cités:
**EP-A- 0 358 268        US-A- 5 440 647**

• **WELCH A ET AL: "A TRANSMISSION-MAP-BASED SCATTER CORRECTION TECHNIQUE FOR SPECT IN INHOMOGENEOUS MEDIA" MEDICAL PHYSICS, vol. 22, no. 10, 1 octobre 1995, pages 1627-1635, XP000543041**
• **FREY E C & TSUI B M W: "A new method for modelling the spatially-variant, object-dependent scatter response function in SPECT" 1996 IEEE NUCLEAR SCIENCE SYMPOSIUM CONFERENCE RECORD, vol. 2, 2 - 9 novembre 1996, ANNAHEIM, CA, SA, pages 1082-1086, XP002045085**
• **WANG H ET AL.: "Solid geometry based modelling of non-uniform attenuation and compton scattering in objects for SPECT imaging systems" 1991 IEEE NUCLEAR SCIENCE SYMPOSIUM AND MEDICAL IMAGING CONFERENCE, vol. 3, 2 - 9 novembre 1991, SANTA FE, NM, USA, pages 1728-1735, XP002045086**

**Description**

Domaine technique

La présente invention concerne un procédé de correction de l'énergie du flux diffusé dans des images de radiographie numérique.

Etat de la technique antérieure

Les différents procédés de l'art connu pour corriger l'énergie du flux diffusé sont :

- des procédés utilisant des méthômes de convolution ;
- des procédés utilisant des méthômes de déconvolution ;
- des procédés de type analytiques avec la mise en équation du rayonnement diffusé et approximation de l'objet par un plan équivalent moyen.

***Les méthodes de convolution***

Les premières méthodes de correction du flux diffusé par traitement de l'image sont les méthodes de correction par convolution. Elles sont basées sur le modèle empirique suivant :

$$I_S = w. (I_P * f_S) \tag{1}$$

où :

- $I_S$ est l'image du flux diffusé ;
- $I_P$ est l'image du flux direct, qui est approximée par l'image du flux observé ;
- w est un facteur de pondération ;
- $f_S$ est le noyau de convolution.

Ce modèle ne provient pas de considérations physiques mais seulement de la constatation que le flux diffusé apparaît dans l'image comme un phénomène de « flou ». Ce modèle a été proposé par Shaw et al. en 1982 avec un noyau fixe et un facteur de pondération w constant, et ce pour la totalité de l'image du flux diffusé. Ce modèle a été repris et amélioré dans les années suivantes :

- Naimuddin et al. en 1987 proposent, pour essayer de mieux estimer le flux diffusé, un facteur w variable en fonction de l'épaisseur de l'objet, s'appuyant sur la remarque qu'un objet « plus épais » diffuse plus (voir document référencé [1] en fin de description).
- Kruger et al. en 1994 proposent un noyau de convolution $f_S$ variable par région, cela pour essayer de tenir compte de l'inhomogénéité des objets (souvent constitués de plusieurs matériaux différents). Cela permet, par exemple, dans le cas de la radiographie thoracique, d'avoir un noyau $f_{S1}$ correspondant à la zone centrale très diffusante (colonne vertébrale, coeur, ..) et un noyau $f_{S2}$ pour les plages pulmonaires moins diffusantes (voir document référencé [2]).
- Highnam et Brady en 1994 proposent, dans le cadre de la mammographie, une méthode de correction du flux diffusé basée sur ce même principe empirique de convolution du flux observé, mais en utilisant des noyaux de convolution dont la taille dépend de l'épaisseur de compression au moment de l'acquisition. Ces noyaux sont estimés par calibration sur des fantômes d'épaisseur variable. Le protocole de réalisation de clichés mammographiques permet facilement d'accéder à ce paramètre, le sein étant comprimé entre deux plaques parallèles (voir document référencé [3]).

***Les méthodes de déconvolution***

La deuxième famille de méthodes de correction du flux diffusé par traitement d'images correspond aux méthodes dites de « déconvolution », le modèle empirique étant le même que celui utilisé dans les méthodes précédentes. En revanche, cette fois on n'approxime plus le flux primaire par le flux observé mais on utilise l'équation :

$$I_{ObS} = I_P + I_S \qquad (2)$$

avec :

$$I_S = w. (I_P * f_S)$$

La détermination de $I_P$, et par conséquent la détermination de $I_S$, nécessite une inversion de l'équation, c'est-à-dire une déconvolution. Celle-ci est généralement effectuée par transformée de Fourier.

- Floyd et al. en 1988 ont utilisé cette approche dans le cadre de la radiographie thoracique, avec un noyau de convolution du type a exp(-b|r|). Les choix de a et b sont effectués par calibration sur fantôme thoracique (voir document référencé [4]).
- Boone et Seibert en 1986 et 1988 ont également utilisé cette approche (voir document référencé (5]), mais en utilisant un noyau de convolution de type gaussien dé la forme :

$$\frac{\rho}{r} \exp\left(-0.5\left(\frac{r}{\sigma}\right)^2\right) \qquad (3)$$

$\rho$ étant la fraction de photons diffusée, r étant la distance radiale en coordonnées polaires d'une origine prédéterminée, et $\sigma$ étant l'étendue de la distribution gaussienne.

Les deux paramètres $\rho$ et $\sigma$ sont également obtenus par calibration sur fantôme.

### *La méthode analytique*

Cette méthode est très différente des précédentes. En effet, elle résulte d'une mise en équation du phénomène physique qui est à l'origine de la création du flux diffusé. Par construction cette méthode tient compte des différents matériaux présents dans l'objet radiographié, ces matériaux intervenant dans la génération et l'atténuation des photons diffusés.

Le principal obstacle à ce type d'approche vient de la non connaissance de la structure trois dimensions de l'objet ; en effet, on dispose seulement de l'image du flux observé qui ne représente qu'une projection de cette structure.

Boone et Seibert ont proposé en 1988 une approche de type analytique, mettant en équation le premier diffusé Compton, limitée à des objets homogènes et d'épaisseur constante. Dans ce cas particulier, le phénomène de diffusion peut être modélisé par une convolution du flux primaire par un noyau issu de calculs analytiques (voir document référencé [8]).

C. Burq a proposé en 1992 une approche de ce type où elle met en équation le premier flux diffusé Compton à partir des lois physiques qui régissent le phénomène de diffusion (voir document référencé [6]). Pour répondre au problème de la non connaissance de la structure trois dimensions de l'objet, C. Burq a proposé une approximation qui consiste à remplacer l'objet par un plan équivalent où l'on concentre la matière, cette approximation n'est valide que dans le cas où l'écran de détection est suffisamment loin de l'objet. Cette hypothèse ne peut être vérifiée dans de nombreuses applications, par exemple en mammographie, l'écran de détection étant à moins d'un centimètre de la face inférieure du sein.

La mise en équation des premiers diffusés Rayleigh (ou cohérent) et Compton (ou incohérent) a été effectuée par des physiciens qui ont pu, connaissant les objets étudiés, répertorier pour chaque matériau la valeur des coefficients d'atténuation, de diffusé cohérent et de diffusé incohérent. Pour l'homme de l'art de la radiographie numérique, il n'est pas évident d'utiliser une telle mise en équation parce qu'elle fait intervenir un objet qui, dans ce domaine, est inconnu.

L'invention a pour objet un procédé qui ne nécessite pas de ramener l'objet dans un plan moyen équivalent pour obtenir une bonne estimation du flux diffusé, dans tous les cas y compris lorsque l'écran est proche de l'objet, ce qui est presque toujours le cas en radiographie médicale.

Exposé de l'invention

L'invention concerne un procédé de correction de l'énergie du flux diffusé dans des images de radiographie numérique obtenues sur un détecteur grâce à une source émettant un spectre d'énergies ionisantes, qui traverse un objet, caractérisé en ce qu'il comporte les étapes suivantes :

*1)* à partir d'une radiographie et d'un premier modèle tridimensionnel de l'objet, on génère un second modèle de l'objet adapté à la géométrie de celui-ci ;

*2)* On discrétise le spectre d'énergie de la source et on affecte à chaque zone de cet objet une valeur de densité moyenne et, pour chacune des énergies du spectre discret, trois coefficients massiques d'absorption, de diffusé cohérent et de diffusé incohérent, et on détermine, par multiplication de la densité et des coefficients massiques, les coefficients d'absorption, de diffusé cohérent et de diffusé incohérent pour chaque zone et pour chaque énergie ;

*3)* on détermine une cartographie de l'énergie du flux primaire ;

*4)* on détermine le long du trajet source-point de la cartographie de l'énergie de flux primaire une nouvelle valeur de densité moyenne pour chacune des zones et pour chaque trajet source-point du détecteur ;

*5)* on multiplie pour chaque énergie le coefficient massique par la densité pour chaque trajet source-point du détecteur et pour chaque zone et on obtient un coefficient de diffusion cohérent et un coefficient de diffusion incohérent par énergie par trajet et par zone ;

*6)* on détermine la cartographie de l'énergie du flux diffusé ;

*7)* on détermine la cartographie de l'énergie du flux primaire en soustrayant la cartographie de l'énergie du flux diffusé à celle de l'énergie du flux observé et on obtient une image de l'objet.

Avantageusement après l'étape *7),* on revient à l'étape *3),* l'énergie du flux, calculé à l'étape *7),* devenant l'énergie du flux primaire estimé de l'étape *3)* de façon à faire des itérations successives permettant d'améliorer le résultat final.

Avantageusement dans la sixième étape, on utilise l'équation suivante, qui exprime l'énergie du flux diffusé en un point M du détecteur et pour une énergie donnée :

$$\iiint_{Q \in D_M} \mu d(Q, E) \frac{d\sigma}{d\Omega}\left(\widehat{\overrightarrow{u(Q)} \; \overrightarrow{QM}, E}\right) \frac{\cos^3(\theta)}{(QP)^2} \exp(-(av + ap))dQ$$

où :

- $D_M$ est la partie d'objet vue depuis le point M ;
- $\mu d(Q,E)$ est la probabilité de générer un photon diffusé au point Q ;
- 
$$\widehat{\overrightarrow{u(Q)} \; \overrightarrow{QM}, E}$$

est l'angle entre la direction de diffusion (QM) et la direction incidente u(Q) des rayons X arrivant en Q ;
- $\theta$ est l'angle entre l'orthogonale au plan récepteur passant par Q, (QP), et la direction du photon diffusé, QM ;
- $\frac{d\sigma}{d\Omega}$ ($\theta$, E) est la probabilité que le photon soit diffusé dans la direction $\theta$ ;
- P est la projection orthogonale du point Q sur le plan du détecteur ;
- exp-(av+ap) représente l'atténuation totale du flux de rayons X avant et après génération du diffusé en Q.

Les caractéristiques connues de l'objet peuvent être :

- sa forme générale ;
- ses constituants chimiques répartis dans différentes zones, ces zones étant définies par une homogénéité de

EP 0 898 765 B1

comportement vis-à-vis du rayonnement diffusé due au fait que les compositions des éléments de la zone sont voisines, chaque zone étant définie par une valeur de densité moyenne ;

- les dispositions relatives des différentes zones.

L'originalité du procédé de l'invention consiste à proposer une démarche de construction d'un modèle approché, permettant d'estimer l'énergie du flux diffusé à partir de la radiographie observée.
Dans un premier mode de réalisation, le procédé de l'invention est tel que :

- dans la troisième étape on prend comme première estimation de l'énergie du flux primaire la cartographie de l'énergie du flux diffusé ;
- dans la quatrième étape, pour chaque point de la cartographie de l'énergie du flux primaire estimé, on construit le long du trajet source-point une nouvelle répartition de densité proportionnelle aux valeurs de densités précédemment affectées dans la deuxième étape.

Le coefficient de proportionnalité est déterminé de la façon suivante :

- on construit la fonction décroissante de l'énergie du flux primaire en fonction du coefficient de proportionnalité $\alpha$ et de toutes les caractéristiques issues de la deuxième étape

$$f(\alpha) = \int_E S(E) \exp\left(-\sum_{|x|}^n \alpha d_i \tau_i^{abs}(E) L_i\right) dE$$

$S(E)$ : Spectre d'énergie de la source
$n$ : Nombre de zones traversées par le trajet source-point
$\alpha$ : Coefficient de proportionnalité
$d_i$ : Densité de la zone i
$\tau_i^{abs}(E)$ : Coefficient massique d'absorption de la zone i à l'énergie E
$L_i$ : Longueur du trajet source-point considéré, dans la zone i

- On détermine la valeur $\alpha$ correspondant à l'énergie du flux primaire estimé dans la troisième étape.

Les nouvelles valeurs de coefficient d'absorption, et de diffusion sont calculées par multiplication de la densité par les coefficients massiques affectés à chaque zone dans la deuxième étape.
Dans un second mode de réalisation on effectue une correction du diffusé, par exemple dans le domaine de la mammographie. Si l'on considère ce domaine le procédé de l'invention est, alors, tel que :

- On utilise l'équation suivante dans le cas monoénergétique :

**5**

$$\text{diff } 1(M, E) \;=\; \iint\limits_{plan} \Phi(E).\,\rho(P).\,d(P)e^{-H.\,\mu abs(P,E)}.$$

$$\left[\int_{0}^{H} e^{\mu abs(P,E).z.\left(1-\frac{1}{\cos(\theta)}\right)} . \frac{d\tau mou}{d\Omega}(E,\theta).\frac{\cos^3(\theta)}{(z+L)^2}.dz\right].d^2P$$

$$+ \iint\limits_{plan} \Phi(E).\,\left[1 - \rho(P)\right].\,d(P)e^{-H.\,\mu abs(P,E)}.$$

$$\left[\int_{0}^{H} e^{\mu abs(P,E).z.\left(1-\frac{1}{\cos(\theta)}\right)} . \frac{d\tau adip}{d\Omega}(E,\theta).\frac{\cos^3(\theta)}{(z+L)^2}.dz\right].d^2P$$

$\cos(\theta)$ étant une fonction de z et de MP, on voit que l'on peut écrire ce diffusé comme la somme de deux convolutions non stationnaires :

| | |
|---|---|
| diff 1(M,E) : | Nombre de photons diffusés au point M, à l'énergie E |
| $\Phi(E)$ : | Nombre de photons qui sortent de la source d'énergie E |
| $\rho(P)$ : | Masse de tissu glandulaire/masse totale sur la colonne qui s'appuie sur le point P |
| d(P) : | Densité sur la colonne qui s'appuie sur la colonne d(P)= $\rho(P) \times$ densité tissu glandulaire+$(1-\rho(P))$ $\times$ densité de graisse dans $e^{-H.\mu abs(P,E)}$ |
| $\mu abs(P,E)$ : | Coefficient d'absorption au point P, à l'énergie E $=d(P)[\rho(P) \times \tau^{abs}($tissu glandulaire, E$) + (1-\rho(P)) \times \tau^{abs}($graisse, E$)]$ avec $\tau^{abs}$ étant les coefficients d'absorption massique |
| H : | Hauteur de compression du sens |
| z : | Endroit où on se situe sur la colonne |
| $\theta$: | Angle entre $\overrightarrow{u(Q)}$ et $\overrightarrow{QM}$ |
| $\frac{d\tau_{mou}}{d\Omega}(E, \theta)$ :. | Section efficace macroscopique massique différen tielle de diffusion du tissu glandulaire |
| L : | Distance sein-détecteur |
| P : | Point du plan qui génère le diffusé |

tout ce qui est « adip » concerne la graisse et tout ce qui est « mou » concerne le tissu glandulaire.

- L'objet est modélisé sous la forme d'un cylindre ayant pour base la projection de celui-ci sur le détecteur et pour axe la direction du rayonnement, composé de petites colonnes cylindriques ayant pour base les pixels du détecteur et pour axe la direction du rayonnement.

- On définit les coefficients massiques d'absorption et de diffusion cohérente et incohérente, définis énergie par énergie.

- On utilise les coefficients de diffusion cohérents et incohérents corrigés de leur facteur de forme pour des composants primaires, les coefficients pour chaque colonne étant obtenus par combinaison linéaire, respectivement à leur proportion, de ces composants primaires.

- La cartographie quantitative est construite de la manière suivante :

- on construit une cartographie en énergie, par calibration du système d'acquisition ;
- on évalue la proportion de diffusé totale, selon le type d'objet ;
- on évalue la proportion de diffusé d'ordre 1, pour ce type d'objet ;
- on en déduit la proportion des diffusés d'ordre supérieur ; on retire de la cartographie en énergie le décalage ainsi construit, cette nouvelle cartographie est appelée énergie primaire + diffusé d'ordre 1 ;
- on définit comme initialisation de l'énergie primaire, la cartographie d'énergie primaire + diffusé d'ordre 1 à laquelle on retire un décalage représentant la proportion obtenue de diffusé d'ordre 1 ;
- on construit une cartographie des proportions de masse, à partir de cette cartographie d'énergie primaire ;
- on évalue par calcul de fonctions et par des convolutions l'énergie diffusée, à partir de cette cartographie de proportions ;
- on obtient une nouvelle cartographie d'énergie primaire, par soustraction de cette cartographie de l'énergie du diffusé à la cartographie d'énergie primaire + diffusé d'ordre 1 ;
- on revient la sixième étape ci-dessus ; en quelques itérations, on converge vers la cartographie d'énergie primaire et, à partir de cette cartographie, on construit une image de l'objet par exemple une image d'épaisseur de tissu glandulaire.

L'invention peut être mise en oeuvre dans plusieurs domaines d'application, par exemple celui du contrôle non destructif et celui de la radiographie médicale, et notamment :

- Dans le domaine du contrôle des soudures de crayons de combustible nucléaire : dans ce cas l'objet est monomatériau, cela permet d'expliciter l'énergie du flux diffusé très simplement à partir de l'énergie du flux primaire (convolution d'une fonctionnelle du flux primaire).
- Dans le domaine de la mammographie : comme cela a été signalé précédemment, le sein est composé de deux matériaux, la graisse et les tissus, qui présentent un comportement voisin vis-à-vis du flux diffusé ; ainsi le flux diffusé peut s'exprimer comme un fonction d'une transformation de la carte du flux primaire.
- Dans le domaine de la radiologie thoracique : la variété des tissus présents dans le thorax (tissus mous, os, poumons) demande de s'appuyer sur un modèle anatomique.

Brève description des dessins

- La figure 1 illustre un objet sans collimateur ;
- la figure 2 illustre un objet collimaté ;
- la figure 3 illustre un objet collimaté par une grille ;
- la figure 4 représente un organigramme illustrant le procédé de l'invention ;
- la figure 5 illustre un modèle tridimensionnel du sein ;
- la figure 6 illustre une courbe du coefficient $\mu$ d'absorption en fonction de l'énergie pour de la graisse ;
- la figure 7 illustre une courbe du coefficient de diffusion cohérente et incohérente en fonction de l'énergie, pour de la graisse ;
- la figure 8 illustre le spectre d'un générateur pour la mammographie ;
- la figure 9 illustre une courbe de l'énergie primaire en fonction de la composition d'une colonne.

Exposé détaillé de modes de réalisation

L'invention concerne un procédé pour améliorer la résolution d'une radiographie (cartographie de l'énergie du flux observé) à partir de connaissances a priori d'un objet à étudier telles que :

- sa forme générale ;
- ses constituants chimiques répartis dans différentes zones, ces zones étant définies par une homogénéité de comportement vis-à-vis du flux diffusé, due au fait que les compositions des éléments de la zone sont voisines, chaque zone étant définie par une valeur de densité moyenne ;
- les dispositions relatives des différentes zones.

Le procédé de l'invention est un procédé de correction de l'énergie du flux diffusé dans des images de radiographie numérique obtenues sur un détecteur grâce à une source émettant un spectre d'énergies ionisantes qui traverse un objet. Ce procédé comporte les étapes suivantes :

**1)** à partir d'une radiographie et d'un modèle tridimensionnel de l'objet, on génère un modèle de l'objet adapté à la géométrie de celui-ci ;

**2)** on discrétise le spectre d'énergie de la source et on affecte à chaque zone, grâce aux tables définies par les physiciens cités plus haut, une valeur de densité moyenne et pour chacune des énergies du spectre discret trois coefficients massiques d'absorption, de diffusé cohérent et de diffusé incohérent, et on détermine par multiplication de la densité et des coefficients massiques, les coefficients d'absorption, de diffusé cohérent et de diffusé incohérent pour chaque zone et pour chaque énergie ;

**3)** on détermine une cartographie de l'énergie du flux primaire ;

**4)** on détermine le long du trajet source-point de la cartographie de l'énergie du flux primaire une nouvelle valeur de densité moyenne pour chacune des zones et pour chaque trajet source-point du détecteur ;

**5)** on multiplie pour chaque énergie le coefficient massique par la densité pour chaque trajet source-point du détecteur et pour chaque zone, on obtient un coefficient de diffusion cohérent et un coefficient de diffusion incohérent et un coefficient d'absorption par énergie par trajet et par zone ;

**6)** on détermine la cartographie de l'énergie du flux diffusé par l'équation donnant le rayonnement diffusé en un point M donnée ci-après ;

**7)** on détermine la cartographie de l'énergie du flux primaire (radiographie améliorée en résolution) en soustrayant la cartographie de l'énergie du flux diffusé à celle de l'énergie du flux observé et on obtient une image de l'objet.

Avantageusement après l'étape **7)**, on peut revenir à l'étape **3)**, l'énergie du flux, calculé à l'étape **7)**, devenant l'énergie du flux primaire estimé de l'étape **3)** de façon à faire des itérations successives permettant d'améliorer le résultat final.

Ce procédé nécessite de faire un compromis entre le nombre d'itérations (plus il y en a plus le temps d'obtention de l'image est grand) et la qualité de l'image souhaitée.

L'invention porte donc sur un procédé de correction des premiers diffusés Compton et Rayleigh dans des images de radiographie numérique s'appuyant sur un modèle physique de génération de la radiographie.

L'utilisation directe de ce modèle physique s'avère généralement impossible car elle nécessite une description trois dimensions de l'objet inaccessible à partir d'une seule radiographie. L'originalité de l'invention consiste à proposer une démarche de construction d'un modèle approché, permettant d'estimer le flux diffusé à partir de la radiographie observée.

Le procédé de l'invention, qui permet la détermination et l'élimination de l'énergie du flux diffusé, comporte trois étapes principales ;

- la mise en équation ;
- la mise en oeuvre d'approximation ;
- la détermination et la soustraction de l'énergie du flux diffusé.

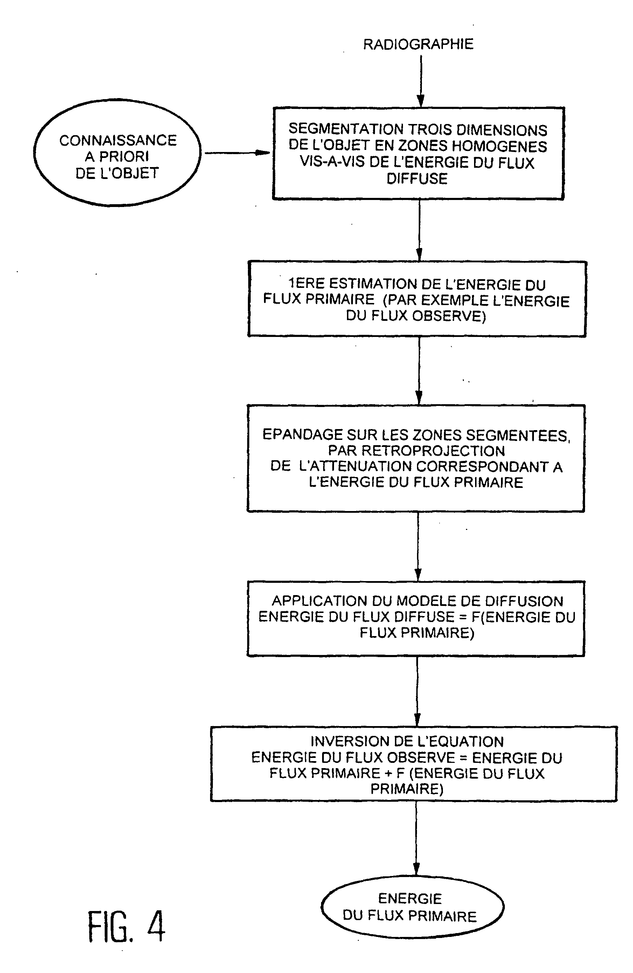

La mise en équation des processus de génération de l'énergie du flux diffusé est réalisée à partir des lois physiques qui régissent le phénomène. Elle conduit à une intégrale triple dont le calcul nécessite une description de la structure trois dimensions de l'objet. Ne disposant, en général, que d'une radiographie cette structure trois dimensions est inaccessible. L'invention propose un procédé de construction par épandage, à partir de connaissances a priori sur l'objet observé et de la carte de l'énergie du flux primaire, d'une approximation des caractéristiques trois dimensions de l'objet nécessaire pour le calcul du flux diffusé. Ce procédé est illustré sur la figure 4.

Sur la base de cette approximation un schéma itératif permet d'identifier le flux diffusé et de le soustraire à la radiographie observée.

### Mise en équation

Il y a deux causes principales qui contribuent à l'énergie du flux diffusé dont l'importance dépend du spectre d'énergie de la source utilisée pour effectuer la radiographie : le diffusé Rayleigh et le diffusé Compton. La mise en équation des premiers diffusés Rayleigh et Compton est réalisée à partir des lois physiques qui régissent le phénomène de diffusion.

La loi principale est donnée par les formules de Klein et Nishina et de Thomson. Elles expriment la probabilité de générer un photon diffusé dans une direction donnée. Cette probabilité est multipliée par un coefficient, spécifique à chaque matériau, traduisant la probabilité de générer un flux diffusé en un site, et par un terme exprimant l'atténuation des photons X dans l'objet. L'ensemble de ces lois est décrit précisément et les coefficients d'atténuation des différents matériaux sont répertoriés dans un article de Hubell et al. de 1975 référencé [7] en fin de description.

L'ensemble de ces lois permet de calculer le flux diffusé généré en chacun des points élémentaires de l'objet et à chaque énergie.

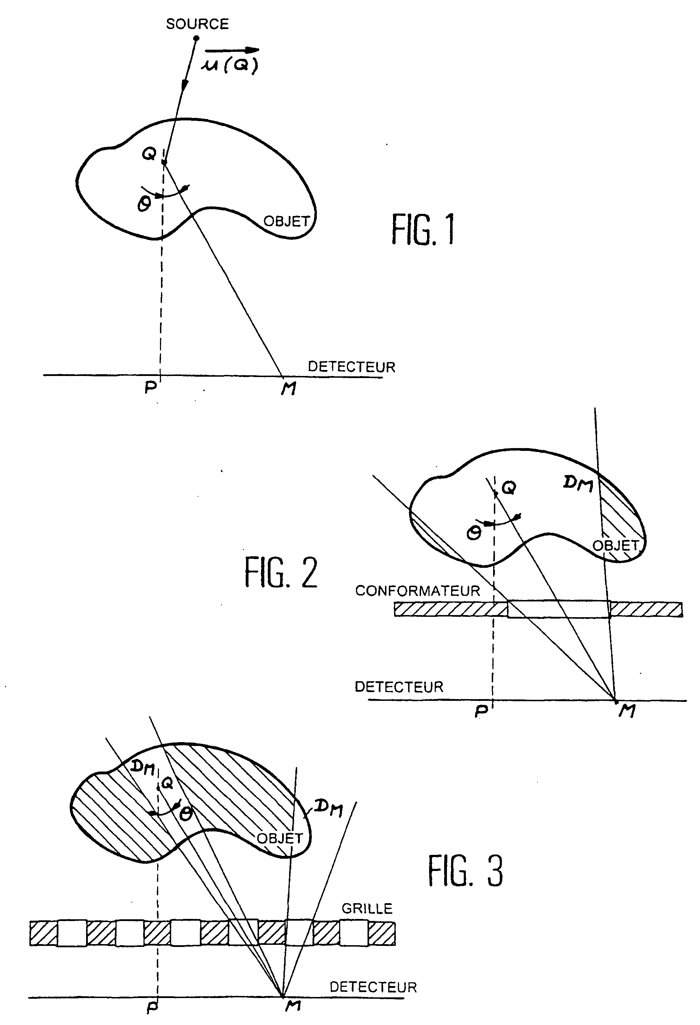

Une intégrale triple sur un domaine correspondant à l'ensemble des points dans l'objet vus depuis un site du détecteur (domaine défini par les collimateurs placés entre l'objet de l'écran, voir figures 1, 2 et 3) permet d'obtenir l'intensité totale du flux diffusé pour une énergie.

Le diffusé en un point M du détecteur à une énergie E s'exprime alors comme :

$$\iiint_{Q \in D_M} \mu d(Q, E) \frac{d\sigma}{d\Omega}\left(\widehat{\vec{u}(Q)\ \vec{QM}, E}\right) \frac{\cos^3(\theta)}{(QP)^2} \exp\left(-(av + ap)\right)dQ$$

$$(4)$$

où :

- $D_M$ est la partie d'objet vue depuis le point M. Par exemple s'il n'y a pas de conformateur entre l'objet et l'écran $D_M$ représente alors tout l'objet (figure 1). Sinon $D_M$ représente l'intersection entre le cône de sommet M s'appuyant sur les bords du conformateur et l'objet (figures 2 et 3).
- $\mu d(Q,E)$ est la probabilité de générer un photon diffusé au point Q. Suivant le cas $\mu d(Q,E)$ représente soit la probabilité de générer un diffusé Rayleigh ou un diffusé Compton.
- 

$$\widehat{\vec{u}(Q)\ \vec{QM}, E}$$

  est l'angle entre la direction de diffusion (QM) et la direction incidente u(Q) des rayons X arrivant en Q.
- $\theta$ est l'angle entre l'orthogonale au plan récepteur passant par Q, (QP), et la direction du photon diffusé, QM.
- $\frac{d\sigma}{d\Omega}(\theta, E)$ est la probabilité que le photon soit diffusé dans la direction $\theta$.
- P est la projection orthogonale du point Q sur le plan du détecteur.
- exp-(av+ap) représente l'atténuation totale du flux de rayons X avant et après génération du diffusé en Q à l'énergie E.

### *Mise en oeuvre d'approximations*

<u>*Approximation de la structure trois dimensions*</u>

Le principal obstacle à l'exploitation de l'équation déterminée ci-dessus est la non-connaissance de la structure trois dimensions de l'objet. En effet, on ne dispose que de l'image de l'énergie du flux observé qui fournit uniquement des informations sur une projection de la structure trois dimensions. Afin de pouvoir produire une estimation de l'énergie du flux diffusé on effectue une approximation consistant en une délocalisation des structures trois dimensions par une opération d'épandage suivant les directions des rayons issus de la source, contrôlée par un modèle trois dimensions simplifié de l'objet.

Le modèle s'appuie sur la connaissance d'un modèle trois dimensions de la segmentation de l'objet observé en zones quasi homogènes vis-à-vis de la génération des photons diffusés.

- Segmentation de l'objet :

  En mammographie, par exemple, on peut considérer que la graisse et les tissus ont des comportements voisins vis-à-vis du flux diffusé. Le modèle trois dimensions de segmentation correspond alors à un seul bloc dont la hauteur est déterminée par la distance entre les plaques de compression et dont les bords latéraux sont identifiés sur la projection. En revanche, en thoracique, au sens du flux diffusé il y a trois types de matériaux à considérer : les tissus mous (coeur, muscle, ...), les os, les poumons.
  La segmentation trois dimensions de l'objet observé, au sens de la génération et de l'atténuation du diffusé, est effectuée au préalable. Elle s'appuie sur un modèle de la « pièce » (industrielle ou anatomique) observée que l'on ajuste à partir de la radiographie.

- Modèle trois dimensions pour la génération du diffusé :

On affecte à chaque zone de matériau de l'objet la valeur moyenne de l'absorption donnée par les tables. On prend comme première estimation de l'énergie du flux primaire la cartographie de l'énergie du flux diffusé. Puis pour chaque point de la cartographie de l'énergie du flux primaire estimé, on construit le long du trajet source-point une nouvelle répartition de densité proportionnelle aux valeurs de densités précédemment affectés. Les nouvelles valeurs de coefficient d'absorption et de diffusion sont calculées par multiplication de la densité par les coefficients massiques affectés à chaque zone.

La connaissance des types de matériaux composant chaque zone de la segmentation et de la valeur d'absorption massique associée, $\mu/\rho$, permet d'en déduire dans chaque zone une densité le long du rayon et ainsi d'accéder au $\mu_{diffusé}$ en chaque point.

Ainsi, à partir d'une segmentation trois dimensions de la « pièce » en zones « homogènes » vis-à-vis du diffusé et de la cartographie de l'énergie du flux primaire, on construit un modèle trois dimensions des cartographies d'absorption et de coefficients de génération des diffusés pour chaque énergie.

A l'aide d'un programme de simulation du flux diffusé pour des objets de forme simple composés de quelques matériaux on a pu mesurer l'erreur induite par ce type d'approximation. En mammographie, par exemple, elle reste inférieure à 10 %.

- Mise en équation simplifiée du diffusé :

Ces approximations permettent alors d'exprimer l'énergie du flux des premiers diffusés, exclusivement à partir de l'image de l'énergie du flux primaire, de paramètres caractéristiques du dispositif d'acquisition et d'une segmentation trois dimensions simplifiée de l'objet.

On a une formule du type : $\Phi_{diffusé} = F(\Phi_{primaire}$, modèle 3D).

*Tabulation de F*

F est une fonction qui ne peut pas s'exprimer analytiquement : elle se calcule par une intégration trois dimensions d'une fonction des coefficients d'absorption et de génération du flux diffusé précédemment déterminés à partir de la cartographie d'énergie du flux primaire et de la segmentation trois dimensions simplifiée.

En revanche, pour certaine configurations, telles que la mammographie ou les objets monomatériaux, cette fonction peut s'exprimer comme une convolution non stationnaire de grandeurs calculées à partir de la carte de flux primaire. Pour optimiser les traitements une tabulation préalable est effectuée une fois pour toute pour un système d'acquisition donné. On tabule $F(\Phi_{primaire}$, modèle 3D).

**Détermination et soustraction du diffusé**

La résolution de l'équation :

$$\Phi_{observé} = \Phi_{primaire} + F(\Phi_{primaire}, \text{ modèle 3D}) \tag{5}$$

détermine le flux primaire.

Cette équation peut être résolue par une méthode de point fixe initialisée soit par la carte de flux observé ou une première carte de flux diffusé déterminée par une méthode de convolution ou déconvolution.

*Premier mode de réalisation*

Dans un premier mode de réalisation, le procédé de l'invention est tel que :

- dans la troisième étape on prend comme première estimation de l'énergie du flux primaire la cartographie du flux diffusé ;
- dans la quatrième étape, pour chaque point de la cartographie de l'énergie du flux primaire estimé, on construit le long du trajet source-point une nouvelle répartition de densité proportionnelle aux valeurs de densités précédemment affectées dans la deuxième étape.

Le coefficient de proportionnalité est déterminé de la façon suivante :

- on construit la fonction décroissante de l'énergie du flux primaire en fonction du coefficient de proportionnalité $\alpha$ et de toutes les caractéristiques issues de la deuxième étape

$$f(\alpha) = \int_E S(E) \exp\left(-\sum_{|x|}^{n} \alpha d_i \tau_i^{abs}(E) L_i\right) dE$$

| | |
|---|---|
| $S(E)$ : | Spectre d'énergie de la source |
| $n$ : | Nombre de zones traversées par le trajet source-point |
| $\alpha$ : | Coefficient de proportionnalité |
| $d_i$ : | Densité de la zone i |
| $\tau_i^{abs}(E)$ : | Coefficient massique d'absorption de la zone i à l'énergie E |
| $L_i$ | : Longueur du trajet source-point considéré, dans la zone i |

- On détermine la valeur $\alpha$ correspondant à l'énergie du flux primaire estimé dans la troisième étape.

Les nouvelles valeurs de coefficient d'absorption, et de diffusion sont calculées par multiplication de la densité par les coefficients massiques affectés à chaque zone dans la deuxième étape.

*Second mode de réalisation*

Dans un second mode de réalisation on effectue une correction du diffusé, par exemple dans le domaine de la mammographie. Si l'on considère ce domaine le procédé de l'invention est alors, tel que :

Les connaissances a priori utilisées pour la construction du premier modèle tridimensionnel sont :

- l'épaisseur de compression du sein ;
- la constitution principale du sein : graisse/tissu glandulaire, ces deux constituants étant mêlés.

On obtient une simplification de la formule (4) donnant le diffusé en un point M du détecteur dans le cadre monochromatique et pour la mammographie.

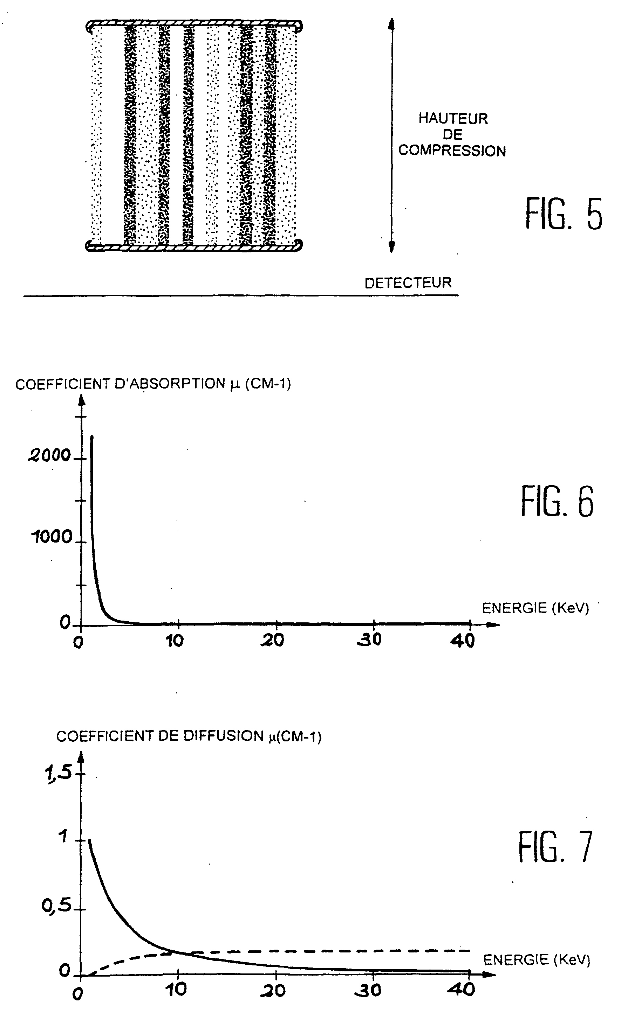

- Pour le modèle d'objet et la simplification de la formule on ajoute une hypothèse de rayonnement parallèle, qui se justifie en mammographie par la distance source objet qui est de l'ordre de 60 cm.
- Le sein est modélisé sous la forme d'un cylindre, comme illustré sur la figure 5, ayant pour base la projection de celui-ci sur le détecteur et pour axe la direction du rayonnement, composé de petites colonnes cylindriques ayant pour base les pixels du détecteur et pour axe la direction du rayonnement et pour hauteur, la hauteur de compression du sein.
- Pour le calcul du diffusé le sein est supposé constitué exclusivement de deux matériaux : le tissu glandulaire et la graisse.
- Chaque colonne est supposée homogène en proportion graisse sur tissu glandulaire.
- Les variations des proportions se faisant lentement dans le sein on ajoute l'hypothèse que le photon X après diffusion garde le même coefficient d'absorption que celui dans la colonne avant diffusion.
- En raison de la faible énergie du rayonnement en mammographie, l'énergie du photon après diffusion est supposée égale à celle avant diffusion.
- Sous toutes ces hypothèses, la formule donnant le diffusé en un point M du détecteur s'écrit sous forme d'une convolution d'une fonction du flux primaire :

$$\iint_{\text{détecteur}} F \ (\text{proportion, atténuation, diffusions})(P).K(\text{atténuation sein moyen, H})(PM)dS$$

$$(6)$$

Cette expression est celle d'une convolution dont K représente le noyau.

Plus précisément dans le cas monoénergétique :

$$\text{diff } 1(M, E) \ = \ \iint_{\text{plan}} \Phi(E). \rho(P). d(\dot{P})e^{-H.\mu abs(P,E)}.$$

$$\left[ \int_0^H e^{\mu abs(P,E).z.\left(1-\frac{1}{\cos(\theta)}\right)} . \frac{d\tau mou}{d\Omega}(E,\theta). \frac{\cos^3(\theta)}{(z+L)^2}. dz \right]. d^2P$$

$$+ \iint_{\text{plan}} \Phi(E). \left[1 - \rho(P)\right]. d(P)e^{-H.\mu abs(P,E)}.$$

$$\left[ \int_0^H e^{\mu abs(P,E).z.\left(1-\frac{1}{\cos(\theta)}\right)} . \frac{d\tau adip}{d\Omega}(E,\theta). \frac{\cos^3(\theta)}{(z+L)^2}. dz \right]. d^2P$$

$$(7)$$

$\cos(\theta)$ étant une fonction de z et de MP, on voit que l'on peut écrire ce diffusé comme la somme de deux convolutions non stationnaires :

diff 1(M,E) :     Nombre de photons diffusés au point M, à l'énergie E

$\Phi(E)$ :     Nombre de photons qui sortent de la source d'énergie E

$\rho(P)$ :     Masse de tissu glandulaire/masse totale sur la colonne qui s'appuie sur le point P

d(P) :     Densité sur la colonne qui s'appuie sur la colonne d(P)= $\rho(P) \times$ densité tissu glandulaire+(1-$\rho(P)$) $\times$ densité de graisse dans $e^{-H.\mu abs(P,E)}$

$\mu abs(P,E)$ :     Coefficient d'absorption au point P, à l'énergie E

=d(P)[$\rho(P) \times \tau^{abs}$(tissu glandulaire, E) + (1-$\rho(P)$) $\times \tau^{abs}$ (graisse, E)]

avec $\tau^{abs}$ étant les coefficients d'absorption massique

H :     Hauteur de compression du sens

z :     Endroit où on se situe sur la colonne

$\theta$ :     Angle entre $\overrightarrow{u(Q)}$ et $\overrightarrow{QM}$

$\frac{d\tau_{mou}}{d\Omega}(E, \theta)$ :     Section efficace macroscopique massique différentielle de diffusion du tissu glandulaire

L :     Distance sein-détecteur

P :     Point du plan qui génère le diffusé tout ce qui est « adip » concerne la graisse et tout ce qui est « mou » concerne le tissu glandulaire.

Ce second mode de réalisation est décrit dans un contexte polyénergétique.

Les coefficients massiques d'absorption et de diffusion sont définis énergie par énergie.

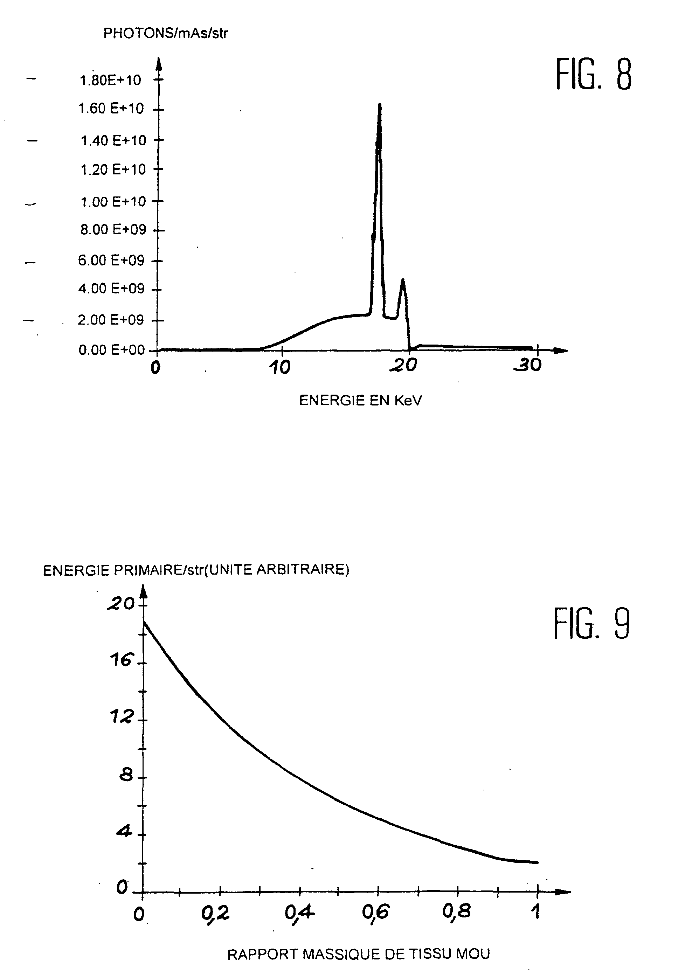

Les différents coefficients massiques d'absorption et de diffusion dépendent de l'énergie comme illustré sur les figures 6 et 7 : sur la figure 6 le tissu est un tissu adipeux et le coefficient d'absorption $\mu$ est le coefficient photoélectrique ; sur la figure 7 le tissu est également adipeux et le coefficient $\mu$ est soit un coefficient cohérent (courbe en trait plein) ou un coefficient incohérent (nombre en pointillés).

La figure 8 illustre le spectre d'un générateur pour la mammographie.

La formule s'écrit alors :

$$\iint_{\text{détecteur}} \hat{F}(\text{proportion, atténuation, diffusions})(P) . \hat{K}(\text{atténuation sein moyen, H})(PM)dS$$

où :

$$\hat{F}(\text{atténuation sein moyen, H})(P) = \int_E S(E)F_E(\text{proportion, atténuation }(E)\text{, diffusions }(E))(P)dE$$

$$(8)$$

$$\hat{K}(\text{atténuation sein moyen, H})(PM) = \int_E S'(E)K(\text{atténuation sein moyen }(E)\text{, H})(PM)dE$$

$$(9)$$

où S(E) est le spectre de la source et S'(E) le spectre après traversée par le flux de rayonnement d'un sein de composition moyenne (50 % de graisse et de tissu glandulaire) et de hauteur, la hauteur de compression.

Pour une hauteur de compression donnée, pour un spectre de source donné on construit une courbe reliant l'énergie primaire à la proportion de masse de tissu glandulaire par rapport à la masse totale :

- Le spectre de la source étant connu, on peut calculer pour une composition donnée du sein en proportion de tissu glandulaire et de graisse et pour une hauteur de compression donnée, l'énergie du flux de rayonnement après traversée d'un tel mélange. En effectuant cela pour les différentes compositions on trace une courbe donnant, à une hauteur de sein donnée, l'énergie primaire en fonction de la composition du sein, telle qu'illustrée sur la figure 9.
- Dans l'algorithme, cette courbe permet à partir des énergies primaires trouvées à une étape de redéfinir une nouvelle composition dans le sein afin d'effectuer un nouveau calcul du diffusé.

On utilise les coefficients de diffusion cohérents et incohérents corrigés de leur facteur de forme pour les composants primaires : la graisse et le tissu glandulaire. Les coefficients pour chaque colonne sont obtenus par combinaison linéaire, respectivement à leur proportion, de ces deux composants :

- Les coefficients de diffusion cohérente et incohérente dépendent de la structure des atomes composant la molécule, la formule précédente (4) est alors modifiée en remplaçant :

$$\mu d(Q, E) \frac{d\sigma}{d\Omega}\left[\left(\overrightarrow{u(Q)}, \overrightarrow{QM}, E\right)^{\wedge}\right]$$

(la distribution de diffusé dans une direction se décompose en une proportion de diffusé au site dépendant de la composition au site par une distribution sur les angles indépendante de la composition) par :

$$\frac{d\mu_{diff}}{d\Omega}\left[Q, E, \left(\overrightarrow{u(Q)}, \overrightarrow{QM}\right)^{\wedge}\right]$$

(la distribution en angle en un site est maintenant dépendante de la composition au site).

- Comme sous la première formulation, la formule (4) se généralise de la même façon au cadre polyénergétique.

Le rayonnement diffusé s'exprime dans un ordre 0 comme une convolution d'une fonction de la cartographie des proportions de masse de tissu glandulaire par rapport à la masse totale par un noyau stationnaire. Dans un ordre 1, ce noyau peut être précisé en ajoutant un terme correctif prenant en compte les variations spatiales de proportion : ce terme correctif s'exprime comme une seconde convolution d'une fonction de la cartographie des proportions de masse de tissu glandulaire par rapport à la masse totale par un noyau stationnaire :

- Dans l'équation (6) apparaît le terme K (atténuation sein moyen, H)(PM), ce terme résulte en fait d'une approximation du terme plus général qui serait K (atténuation sein (P), H)(PM). Cette approximation est appelée approximation à l'ordre 0. Si on effectue un développement limité de cette fonction suivant la variable « atténuation sein » autour de la valeur « atténuation sein moyen », on obtient des approximations de plus en plus fines du calcul de diffusé. Les modèles ainsi obtenus sont alors appelés modèle d'ordre 1, ...
- L'amélioration de la représentativité du modèle se traduit par l'ajout de convolutions supplémentaires.

Dans une mammographie, se superposent l'énergie primaire, l'énergie de la première diffusion et les énergies de diffusion d'ordre supérieur (ayant subi plus d'une diffusion Compton). Le modèle de correction précédent modélise et permet de corriger les premiers diffusés. Afin de mettre en oeuvre la méthode sur une mammographie réelle, il faut déterminer l'énergie des diffusés d'ordre supérieur. En raison de la faible énergie du rayonnement en mammographie, l'énergie des diffusés d'ordre supérieur ou égal à 2 est supposée être constante en tous les site du détecteur. Cette valeur constante est appelée « offset ».

Pour identifier cet offset on s'appuie sur des valeurs tabulées de la proportion d'énergie diffusée par rapport à l'énergie totale pour différents types de sein, d'une tabulation (obtenue par un programme de simulation) de la proportion d'énergie de diffusé d'ordre 1 par rapport à l'énergie primaire pour différents types de sein. Par combinaison, pour une mammographie donnée on trouve l'énergie des diffusés d'ordre supérieur ou égal à 2. Cette constante, appelée offset est retirée à l'énergie observée.

La cartographie quantitative est alors construite de la manière suivante :

- on construit une cartographie en énergie, par calibration du système d'acquisition ;
- on évalue la proportion de diffusé totale, pour le type de sein ;
- on évalue la proportion de diffusé d'ordre un, pour ce type de sein ;
- on en déduit la proportion des diffusés d'ordre supérieur ; on retire de la cartographie en énergie l'offset ainsi construit, cette nouvelle cartographie est appelée cartographie d'énergie primaire + diffusé d'ordre 1 ;
- on définit comme initialisation de l'énergie primaire, la cartographie d'énergie primaire + diffusé d'ordre 1 ;
- on construit une cartographie des proportions de masse de tissu glandulaire par rapport à la masse totale, à partir de cette cartographie d'énergie primaire ;
- on évalue, par calcul de fonctions et par des convolutions, l'énergie diffusée, à partir de cette cartographie de proportions ;

- on obtient une nouvelle cartographie d'énergie primaire par soustraction de cette cartographie de l'énergie de diffusé à la cartographie d'énergie primaire + diffusé d'ordre 1 ;
- on revient à la sixième étape ci-dessus.

En quelques itérations on converge vers la cartographie d'énergie primaire. A partir de cette cartographie on construit une image d'épaisseur de tissu glandulaire.

## REFERENCES

[1] « Scatter-Glare Correction using A Convolution Algorithm With Variable Weighting » de Shaikh Naimuddin, Bruce Hasegawa et Charles A. Mistretta (Medical Physics, vol. 14, n° 3, mai/juin 1987, pages 330 à 334).

[2] « A Regional Convolution Kernel Algorithm For Scatter Correction In Dual-Energy Images : Comparison To Single-Kernel Algorithms » de David G. Kruger, Frank Zink, Walter W. Peppler, David L. Ergun et Charles A. Mistretta (Medical Physics, vol. 21, n° 2, février 1994, pages 175 à 184).

[3] « Computing The Scatter Component Of Mammographic Images » de R.P. Highnam, J.M. Brady et B.J. Shepstone (IEEE Transactions On Medical Imaging, vol. 13, n° 2, juin 1994, pages 301 à 313).

[4] « Scatter Compensation In Digital Chest Radiography Using Fourier Deconvolution » de Carey E. Floyd, Peter T. Beatty et Carl E. Ravin (Investiture Radiology, vol. 24, n° 1, 1989, pages 30 à 33).

[5] « X-Ray Scatter Removal By Deconvolution » de J.A. Seibert, J.M. Boone (Medical Physics, vol. 15, n° 4, juillet/août 1988, pages 567 à 575).

[6] « Modèles de dégradations en radiographie et restauration d'images » de Catherine Burq (Thèse de Docteur en Sciences Mathématiques, Université Paris Sud, Centre d'Orsay, soutenue le 5 mars 1992)

[7] « Atomic Form Factors, Incoherent Scattering Functions, And Photon Scattering Cross Sections » . de J.H. Hubbell, Vm.J. Veigele, E.A. Briggs, R.T. Brown, D.T. Cromer et R.J. Howerton (J. Phy. Chem. Ref. Data, vol. 4, n° 3, 1975, pages 471 à 496).

[8] « An Analytical Model Of The Scattered radiation Distribution In Diagnostic Radiology » de J.M. Boone, J.A. Seibert (Medical Physics, vol. 15, n° 5, Sept./Oct. 1988, pages 721 à 725).

## Revendications

1.  Procédé de correction de l'énergie du flux diffusé dans des images de radiographie numérique obtenues sur un détecteur grâce à une source émettant un spectre d'énergies ionisantes qui traverse un objet, **caractérisé en ce qu'**il comporte les étapes suivantes :

    - à partir d'une radiographie et d'un premier modèle tridimensionnel de l'objet, on génère un second modèle de l'objet adapté à la géométrie de celui-ci ;
    - on discrétise le spectre d'énergie de la source et on affecte à chaque zone de cet objet une valeur de densité moyenne et, pour chacune des énergies du spectre discret trois coefficients massiques d'absorption, de diffusé cohérent et de diffusé incohérent et on détermine, par multiplication de la densité et de ces coefficients massiques, les coefficients d'absorption, de diffusé cohérent et de diffusé incohérent pour chaque zone ;
    - on détermine une cartographie de l'énergie du flux primaire ;
    - on détermine le long du trajet source-point de la cartographie de l'énergie du flux primaire une nouvelle valeur de densité moyenne pour chacune des zones et pour chaque trajet source-point du détecteur ;
    - on multiplie pour chaque énergie le coefficient massique par la densité pour chaque trajet source-point du détecteur et pour chaque zone et on obtient un coefficient de diffusion cohérent et un coefficient de diffusion incohérent par énergie par trajet et par zone ;
    - on détermine la cartographie de l'énergie du flux diffusé ;
    - on détermine la cartographie de l'énergie du flux primaire en soustrayant la cartographie de l'énergie du flux diffusé à celle du flux observé et on obtient une image de l'objet.

2.  Procédé selon la revendication 1, dans lequel on revient à la troisième étape, l'énergie du flux primaire calculé lors de la septième étape devenant le flux primaire estimé de la troisième étape de façon à faire des itérations successives permettant d'améliorer le résultat final.

**3.** Procédé selon la revendication 1, dans lequel à la sixième étape, on utilise l'équation suivante, qui exprime le diffusé en un point M du détecteur pour une énergie donnée E :

$$\iiint_{Q \in D_M} \mu d(Q, E) \frac{d\sigma}{d\Omega}\left( \overset{\wedge}{\overrightarrow{u(Q)} \, \overrightarrow{QM}}, E \right) \frac{\cos^3(\theta)}{(QP)^2} \exp\left(-(av + ap)\right) dQ$$

où :

- $D_M$ est la partie d'objet vue depuis le point M ;
- $\mu d(Q,E)$ est la probabilité de générer un photon diffusé au point Q ;
- 

$$\overset{\wedge}{\overrightarrow{u(Q)} \, \overrightarrow{QM}}$$

  est l'angle entre la direction de diffusion (QM) et la direction incidente u(Q) des rayons X arrivant en Q ;
- $\theta$ est l'angle entre l'orthogonale au plan récepteur passant par Q, (QP), et la direction du photon diffusé, QM ;
- $\frac{d\sigma}{d\Omega}$ $(\theta, E)$ est la probabilité que le photon soit diffusé dans la direction $\theta$ ;
- P est la projection orthogonale du point Q sur le plan du détecteur ;
- exp-(av+ap) représente l'atténuation totale du flux de rayons X avant et après génération du diffusé en Q.

**4.** Procédé selon la revendication 1, dans lequel les caractéristiques connues de cet objet sont :

- sa forme générale ;
- ses constituants chimiques répartis dans des différentes zones, ces zones étant définies par une homogénéité de comportement vis-à-vis du flux diffusé due au fait que les compositions des éléments de la zone sont voisines, chaque zone étant définie par une valeur de densité moyenne ;
- les dispositions relatives des différentes zones.

**5.** Procédé selon la revendication 1, dans lequel :

- dans la troisième étape on prend comme première estimation de l'énergie du flux primaire la cartographie du flux diffusé ;
- dans la quatrième étape, pour chaque point de la cartographie de l'énergie du flux primaire estimé, on construit le long du trajet source-point une nouvelle répartition de densité proportionnelle aux valeurs de densités précédemment affectées dans la deuxième étape ;

dans lequel le coefficient de proportionnalité est déterminé de la façon suivante :

- on construit la fonction décroissante de l'énergie du flux primaire en fonction du coefficient de proportionnalité $\alpha$ et de toutes les caractéristiques issues de la deuxième étape

$$f(\alpha) = \int_E S(E) \exp\left(-\sum_{|x|}^{n} \alpha d_i \tau_i^{abs}(E) L_i\right) dE$$

S(E) :      Spectre d'énergie de la source

n :            Nombre de zones traversées par le trajet source-point

$\alpha$ :            Coefficient de proportionnalité

$d_i$ :            Densité de la zone i

$\tau_i^{abs}(E)$ :      Coefficient massique d'absorption de la zone i à l'énergie E

$L_i$ :            Longueur du trajet source-point considéré, dans la zone i

- On détermine la valeur $\alpha$ correspondant à l'énergie du flux primaire estimé dans la troisième étape ;

et dans lequel les nouvelles valeurs de coefficient d'absorption, et de diffusion sont calculées par multiplication de la densité par les coefficients massiques affectés à chaque zone dans la deuxième étape.

6. Procédé selon la revendication 5, dans lequel dans la troisième étape on prend la cartographie du flux observé comme première estimation de cartographie du flux primaire.

7. Procédé selon la revendication 1, dans lequel on utilise l'équation suivante :

$$\text{diff } 1(M, E) = \iint_{plan} \Phi(E) . \rho(P) . d(P)e^{-H. \mu abs(P, E)} .$$

$$\left[ \int_0^H e^{\mu abs(P,E).z.\left(1-\frac{1}{\cos(\theta)}\right)} . \frac{d\tau mou}{d\Omega}(E,\theta) . \frac{\cos^3(\theta)}{(z+L)^2} . dz \right] . d^2P$$

$$+ \iint_{plan} \Phi(E) . \left[1 - \rho(P)\right] . d(P)e^{-H. \mu abs(P, E)} .$$

$$\left[ \int_0^H e^{\mu abs(P,E).z.\left(1-\frac{1}{\cos(\theta)}\right)} . \frac{d\tau adip}{d\Omega}(E,\theta) . \frac{\cos^3(\theta)}{(z+L)^2} . dz \right] . d^2P$$

$\cos(\theta)$ étant une fonction de z et de MP, on voit que l'on peut écrire ce diffusé comme la somme de deux convolutions non stationnaires :

diff 1(M,E) :       Nombre de photons diffusés au point M, à l'énergie E

$\Phi(E)$ :            Nombre de photons qui sortent de la source d'énergie E

$\rho(P)$ :            Masse de tissu glandulaire/masse totale sur la colonne qui s'appuie sur le point P

d(P) :            Densité sur la colonne qui s'appuie sur la colonne d(P)= $\rho(P) \times$ densité tissu glandulaire+(1-$\rho$(P)) $\times$ densité de graisse dans $e^{-H,\mu abs(P,E)}$

$\mu abs(P,E)$ :     Coefficient d'absorption au point P, à l'énergie E

                       =d(P)[$\rho(P) \times \tau^{abs}$(tissu glandulaire, E) + (1-$\rho(P)) \times \tau^{abs}$ (graisse, E)]

                       avec $\tau^{abs}$ étant les coefficients d'absorption massique

H :              Hauteur de compression du sens

z :              Endroit où on se situe sur la colonne

$\theta$ :             Angle entre $\overrightarrow{u(Q)}$ et $\overrightarrow{QM}$

$\frac{d\tau_{mou}}{d\Omega}$ (E, $\theta$) :     Section efficace de macroscopique massique différentielle de diffusion du tissu glandulaire

L :              Distance sein-détecteur

P :              Point du plan qui génère le diffusé

8. Procédé selon la revendication 7, dans lequel l'objet est modélisé sous la forme d'un cylindre ayant pour base la projection de celui-ci sur le détecteur et pour axe la direction du rayonnement, composé de petites colonnes cylindriques ayant pour base les pixels du détecteur et pour axe la direction du rayonnement.

**9.** Procédé selon la revendication 7, dans lequel on définit les coefficients massiques d'absorption et de diffusion énergie par énergie.

**10.** Procédé selon la revendication 7, dans lequel on utilise les coefficients de diffusion cohérents et incohérents corrigés de leur facteur de forme pour des composants primaires, les coefficients pour chaque colonne étant obtenus par combinaison linéaire, respectivement à leur proportion, de ces composants primaires.

**11.** Procédé selon la revendication 7, dans lequel la cartographie quantitative est construite de la manière suivante :

- on construit une cartographie en énergie, par calibration du système d'acquisition ;
- on évalue la proportion de diffusé totale, selon le type d'objet ;
- on évalue la proportion de diffusé d'ordre 1, pour ce type d'objet ;
- on en déduit la proportion des diffusés d'ordre supérieur ; on retire de la cartographie en énergie le décalage ainsi construit, cette nouvelle cartographie est appelée cartographie d'énergie primaire + diffusé d'ordre 1 ;
- on définit comme initialisation de l'énergie primaire, la cartographie d'énergie primaire + diffusé d'ordre 1 ;
- on construit une cartographie des proportions de masse, à partir de cette cartographie d'énergie primaire ;
- on évalue, par calcul de fonctions et par des convolutions, l'énergie diffusée, à partir de cette cartographie de proportions ;
- on obtient une nouvelle cartographie d'énergie primaire par soustraction de cette cartographie de l'énergie de diffusé à la cartographie d'énergie primaire + diffusé d'ordre 1 ;
- on revient à la sixième étape ci-dessus ;

et dans lequel, en quelques itérations, on converge vers la cartographie d'énergie primaire, et dans lequel à partir de cette cartographie on construit une image de l'objet.

**Patentansprüche**

**1.** Verfahren zum Korrigieren der Streuflussenergie in digitalen radiographischen Darstellungen, erlangt in einem Detektor dank einer Quelle, die ein ein Objekt durchquerendes Spektrum ionisierender Energien emittiert, **dadurch gekennzeichnet, dass** es die folgenden Schritte umfasst:

- aufgrund einer Radiographie und einem ersten dreidimensionalen Modell des Objekts erzeugt man ein zweites Modell des Objekts, angepasst an dessen Geometrie;
- man diskretisiert das Energiespektrum der Quelle und teilt jeder Zone dieses Objekts einen mittleren Dichtewert und jeder der Energien des diskreten Spektrums drei Absorptionsmassenkoeffizienten kohärenter Streuung und inkohärenter Streuung zu, und man bestimmt durch Multiplikation der Dichte und dieser Massenkoeffizienten die Absorptionskoeffizienten kohärenter Streuung und inkohärenter Streuung für jede Zone;
- man ermittelt eine Primärflussenergie-Kartographie;
- man ermittelt längs der Strecke Quelle-Primärflussenergiekartographiepunkt einen neuen Dichte-Mittelwert für jede der Zonen und für jede Quelle-Detektorpunkt-Strecke;
- man multipliziert für jede Energie den Massenkoeffizienten mit der Dichte für jede Quelle-Detektorpunkt-Strecke und für jede Zone, und man erhält einen Koeffizienten kohärenter Streuung und einen Koeffizienten inkohärenter Streuung pro Energie pro Strecke und pro Zone;
- man ermittelt die Streuflussenergie-Kartographie;
- man ermittelt die Primärflussenergie-Kartographie, indem man die Streuflussenergie-Kartographie von der des beobachteten Flusses subtrahiert und man erhält eine Darstellung des Objekts.

**2.** Verfahren nach Anspruch 1, bei dem man zu dem dritten Schritt zurückkehrt, wobei die während des siebten Schritts berechnete Primärflussenergie der ermittelte Primärfluss des dritten Schritts wird und man sukzessive Iterationen durchführt, die ermöglichen, das Endresultat zu verbessern.

**3.** Verfahren nach Anspruch 1, bei dem man in dem siebten Schritt die folgende Gleichung anwendet, welche die Streuung in einem Punkt M des Detektors für eine bestimmte Energie E ausdrückt:

$$\iiint_{Q \in D_M} \mu d(Q,E) \frac{d\sigma}{d\Omega}(\overset{\wedge}{\overrightarrow{u(Q)} \ \overrightarrow{QM}},E) \frac{\cos^3(\theta)}{(OP)^2} \exp(-(av+ap))dQ$$

wo:

- $D_M$ der von dem Punkt M aus gesehene Teil des Objekts ist;
- $\mu d(Q,E)$ die Wahrscheinlichkeit ist, im Punkt Q ein Streuphoton zu erzeugen;
- 

$$\overset{\wedge}{\overrightarrow{u(Q)} \ \overrightarrow{QM}}$$

der Winkel ist zwischen der Streurichtung (QM) und der Einfallrichtung u(Q) der in Q eintreffenden Röntgenstrahlen;
- $\theta$ der Winkel ist zwischen der durch Q verlaufenden Rechtwinkligen zu der Empfängerebene (QP) und der Richtung des Streuphotons (QM);
- $\frac{d\sigma}{d\Omega}(\theta,E)$ die Wahrscheinlichkeit ist, dass das Photon in der Richtung $\theta$ gestreut wird
- P die rechtwinklige Projektion des Punkts Q auf die Ebene des Detektors ist;
- exp-(av+ap) die Gesamtdämpfung des Röntgenstrahlenflusses vor und nach Erzeugung der Streuung in Q ist.

4. Verfahren nach Anspruch 1, bei dem die bekannten Charakteristika dieses Objekts sind:

   - seine allgemeine Form;
   - seine in verschiedenen Zonen verteilten chemischen Bestandteile, wobei diese zonen definiert sind durch eine Homogenität des Verhaltens gegenüber dem Streufluss aufgrund der Tatsache, dass die Zusammensetzungen der Elemente der Zone ähnlich sind, wobei jede Zone durch einen mittleren Dichtewert definiert ist;
   - die relativen Anordnungen der verschiedenen Zonen.

5. Verfahren nach Anspruch 1, bei dem:

   - man im dritten Schritt als erste Schätzung der Primärflussenergie die Kartographie des Streuflusses nimmt;
   - man im vierten Schritt für jeden Punkt der Kartographie der geschätzten Primärflussenergie längs der Quelle-Punkt-Strecke eine neue Dichte-Verteilung konstruiert, proportional zu den vorhergehend in dem zweiten Schritt zugeteilten Werten der Dichten; bei dem der Proportionalitätskoeffizient folgendermaßen bestimmt wird:

   - man konstruiert die absteigende Funktion der Primärflussenergie in Abhängigkeit von dem Proportionalitätskoeffizienten $\alpha$ und allen aus dem zweiten Schritt stammenden Charakteristika

$$f(\alpha) = \int_E S(E) \exp\left(-\sum_{i=1}^{n} \alpha d_i \tau_i^{abs}(E) L_i\right) dE$$

| | |
|---|---|
| S(E) : | Energiespektrum der Quelle |
| n : | Anzahl der Von der Quelle-Punkt-Strecke durchquerten Zonen |
| $\alpha$ : | Proportionalitätskoeffizient |
| $d_i$ : | Dichte der Zone i |
| $T_i^{abs}(E)$ : | Absorptionsmassenkoeffizient der Zone i mit der Energie E |
| $L_i$ : | Länge der betrachteten Quelle-Punkt-Strecke in der Zone i |

- man bestimmt den der in dem dritten Schritt geschätzten Primärflussenergie entsprechenden Wert $\alpha$;

und bei dem die neuen Absorptionskoeffizienten- und Streuwerte berechnet werden durch Multiplikation der Dichte mit den jeder Zone in dem zweiten Schritt zugeteilten Massenkoeffizienten.

**6.** Verfahren nach Anspruch 5, bei dem man in dem dritten Schritt die Kartographie des als erste Kartographiebewertung des Primärflusses beobachteten Flusses nimmt.

**7.** Verfahren nach Anspruch 1, bei dem man die folgende Gleichung benutzt:

$$
\begin{aligned}
\text{diff } 1(M, E) = &\iint_{\text{plan}} \Phi(E) \cdot \rho(P) \cdot d(P) e^{-H \cdot \mu abs(P,E)} \cdot \\
&\left[ \int_0^H e^{\mu abs(P,E) \cdot z \cdot \left(1 - \frac{1}{\cos(\theta)}\right)} \cdot \frac{d\tau mou}{d\Omega}(E,\theta) \cdot \frac{\cos^3(\theta)}{(z+L)^2} \cdot dz \right] \cdot d^2P \\
+ &\iint_{\text{plan}} \Phi(E) \cdot [1 - \rho(P)] \cdot d(P) e^{-H \cdot \mu abs(P,E)} \cdot \\
&\left[ \int_0^H e^{\mu abs(P,E) \cdot z \cdot \left(1 - \frac{1}{\cos(\theta)}\right)} \cdot \frac{d\tau adip}{d\Omega}(E,\theta) \cdot \frac{\cos^3(\theta)}{(z+L)^2} \cdot dz \right] \cdot d^2P
\end{aligned}
$$

da $\cos(\theta)$ eine Funktion von z und von MP ist, sieht man, dass man diese Streuung als die Summe von zwei nichtstationären Faltungen schreiben kann:

diff 1 (M,E): Anzahl der im Punkt M mit der Energie E gestreuten Photonen
$\Phi(E)$: Anzahl der die Quelle mit der Energie E verlassenden Photonen
$\rho(P)$: Drüsengewebemasse/Gesamtgewebemasse in der Säule, die sich auf dem Punkt P abstützt
d(P): Dichte in der Säule, die sich auf der Säule d(P)= $\rho(P)$ abstützt x Fettdichte in $e^{-H \cdot \mu abs(P,E)}$
$\mu abs(P,E)$: Absorptionskoeffizient im Punkt P, mit der Energie E
=d(P)[$\rho(P)$ x $T^{abs}$(Drüsengewebe, E) + (1-$\rho(P)$) x $T^{abs}$ (Fett, E)]
mit $T^{abs}$ als Absorptionsmassenkoeffizienten
H: Kompressionshöhe der Brust
z: Stelle an der sich die Säule befindet
$\theta$: Winkel zwischen $\overrightarrow{u(Q)}$ und $\overrightarrow{QM}$
$\frac{d\tau_{mou}}{d\Omega}$ (E, $\theta$): differentieller massenbezogener makroskopischer Streuungswirkquerschnitt des Drüsengewebes
L: Abstand Brust-Detektor
P: Punkt der Ebene, der die Streuung erzeugt.

**8.** Verfahren nach Anspruch 7, bei dem das Objekt modelliert wird in Form eines Zylinders, dessen Basis die Projektion von diesem auf den Detektor ist, dessen Achse die Strahlungsrichtung ist und der gebildet wird durch kleine zylindrische Säulen, deren Basis die Pixel des Detektors bilden und deren Achse die Strahlungsrichtung ist.

**9.** Verfahren nach Anspruch 7, bei dem man die Absorptions- und Streuungsmassenkoeffizienten Energie für Energie definiert.

**10.** Verfahren nach Anspruch 7, bei dem man die kohärenten und inkohärenten Streuungskoeffizienten, korrigiert um ihren Formfaktor, für Primärkomponenten benutzt, wobei die Koeffizienten für jede Säule jeweils entsprechend ihrem Verhältnis bzw. Größenverhältnis durch Linearkombination dieser Primärkomponenten erlangt werden.

**11.** Verfahren nach Anspruch 7, bei dem die quantitative Kartographie folgendermaßen konstruiert wird:

- man konstruiert durch Kalibrierung des Erfassungssystems eine Energie-Kartographie;
- man bewertet das Gesamtstreuungsverhältnis entsprechend dem Objekttyp;
- man bewertet das Streuungsverhältnis erster Ordnung für diesen Objekttyp;
- man leitet davon das Verhältnis der Streuungen höherer Ordnung ab; man entzieht der Energie-Kartographie die derart konstruierte Verschiebung und nennt diese neue Kartographie Primärenergie- + Streuung-erster-Ordnung-Kartographie;
- man definiert als Initialisierung der Primärenergie die Primärenergie- + Streuung-erster-Ordung-Kartographie;
- man konstruiert eine Kartographie der Massenverhältnisse aufgrund dieser Primärenergiekartographie;
- man bewertet durch Berechnung von Funktionen und durch Faltungen die Streuenergie aufgrund dieser Kartographie der Verhältnisse;
- man erhält eine neue Primärenergiekartographie durch Subtraktion dieser Streuenergiekartographie von der Primärenergie- + Streuung-erster-Ordnung-Kartographie;
- man kehrt zum sechsten Schritt weiter oben zurück;

in welchem man durch einige Iterationen zu der Primärenergiekartographie konvergiert, und in welchem man aufgrund dieser Kartographie eine Darstellung des Objekts konstruiert.

**Claims**

**1.** Process for the correction of scatter energy in digital X-ray images obtained on a detector, by means of a source emitting a spectrum of ionizing energies which pass through an object, **characterized in that** it comprises the following stages:

- using an X-ray and a first three-dimensional model of the object, a second model of the object is generated adapted to its geometry;

- the energy spectrum of the source is made discrete and to each zone of this object an average density value is allocated and, for each of the energies of the discrete spectrum three mass coefficients of absorption, coherent scatter and incoherent scatter are allocated, and, by multiplying the density with these mass coefficients, the coefficients of absorption, coherent scatter and incoherent scatter are determined for. each zone;

- primary energy is mapped;

- along the source-point tracklength of the map of primary energy, a new average density value is determined for each of these zones and for each source-point tracklength of the detector;

- for each energy the mass coefficient is multiplied by the density for each source-point tracklength of the detector and for each zone, and a coherent scatter coefficient and an incoherent scatter coefficient is obtained per energy, per tracklength, and per zone;

- scatter energy is mapped;

- the map of primary energy is determined by subtracting the map of scatter energy from the map of observed transmission and an image of the object is obtained.

**2.** Process in accordance with claim 1, in which it is returned to stage three, the primary energy calculated during stage seven becoming the estimated primary transmission of stage three so as to make successive iterations to improve the final result.

**3.** Process in accordance with claim 1, in which at stage six, the following equation is used which expresses scatter at a point M of the detector for a given energy E:

$$\iiint_{Q \in D_M} \mu d(Q, E) \frac{d\sigma}{d\Omega}\left(\overrightarrow{u(Q)} \; \overset{\wedge}{\overrightarrow{QM}}, E\right) \frac{\cos^3(\theta)}{(QP)^2} \exp(-(av + ap))dQ$$

in which:

- $D_M$ is the part of the object seen from point M ;

- $\mu d$ (Q,E) is the probability of generating a scattered photon at point Q;

- 

$$\overset{\wedge}{\overrightarrow{u(Q)} \; \overrightarrow{QM}}$$

is the angle between scatter direction(QM) and incident direction u(Q) of the X rays arriving at Q;

- $\theta$ is the angle between the orthogonal on the receptor plane passing through Q, (QP) and the direction of the scattered photon, QM;

- $\frac{d\sigma}{d\Omega}(\theta, E)$ is the probability that the photon will be scattered in direction $\theta$;

- P is the orthogonal projection of point Q on the detector plane;

- exp-(av+ap) represents total attenuation of the flow of X-rays before and after generation of scatter at Q.

4. Process in accordance with claim 1, in which the known characteristics of this object are:

- its general shape;
- its chemical constituents distributed over different zones, these zones being defined by their homogeneous response to scatter due to the fact that the compositions of the elements of the zone are similar, each zone being defined by an average density value;
- the relative lay-outs of the different zones.

5. Process in accordance with claim 1, in which:

- in stage three the map of scatter energy is used as the first estimate of primary energy;

- in stage four, for each point on the map of the estimated primary energy, along the source-point tracklength, a new distribution of density is built that is proportional to the density values previously allocated in stage two;

in which the coefficient of proportionality is determined in the following manner:

- the decreasing function of primary energy is built in relation to the coefficient of proportionality $\alpha$ and to all the characteristics derived from stage two:

$$f(\alpha) = \int_E S(E) \exp\left(-\sum_{|x|}^{n} \alpha d_i \tau_i^{abs}(E)L_i\right) dE$$

S(E) :       Energy spectrum of the source

n :       Number of zones through which the source-point tracklength passes

$\alpha$ :       Coefficient of proportionality

di :       Density of zone i

$\tau i^{abs}(E)$ :       Mass absorption coefficient of zone i at energy E

Li :       Source-point tracklength under consideration in zone i.

- Value $\alpha$ is determined corresponding to the primary energy estimated at stage three;

in which the new coefficient values of absorption and scatter are calculated by multiplying the density by the mass coefficients allocated to each zone in stage two.

6. Process in accordance with claim 5, in which, in stage three, the map of observed flow is used as first estimate of the map of primary transmission.

7. Process in accordance with claim 1, in which the following equation is used:

$$\text{diff } 1(M, E) = \iint\limits_{plane} \Phi(E) \cdot \rho(P) \cdot d(P) e^{-H \cdot \mu abs(P, E)} \cdot$$

$$\left[ \int_0^H e^{\mu abs(P,E) \cdot z \cdot \left(1 - \frac{1}{\cos(\theta)}\right)} \cdot \frac{d\tau_{soft}}{d\Omega}(E, \theta) \cdot \frac{\cos^3(\theta)}{(z + L)^2} \cdot dz \right] \cdot d^2P$$

$$+ \iint\limits_{plane} \Phi(E) \cdot \left[1 - \rho(P)\right] \cdot d(P) e^{-H \cdot \mu abs(P, E)} \cdot$$

$$\left[ \int_0^H e^{\mu abs(P,E) \cdot z \cdot \left(1 - \frac{1}{\cos(\theta)}\right)} \cdot \frac{d\tau_{adip}}{d\Omega}(E, \theta) \cdot \frac{\cos^3(\theta)}{(z + L)^2} \cdot dz \right] \cdot d^2P$$

cos ($\theta$), being a function of z and MP, it is seen that this scatter can be written as the sum of two non-stationary convolutions:

diff 1(M,E) :       Number of photons scattered at point M, at energy E

$\phi(E)$ :       Number of photons leaving energy source E

$\rho(P)$ :       Mass of glandular tissue/total mass on the column pressing upon point P

d(p) :       Density on the column pressing upon column d(P) = $\rho$(P) x glandular tissue density +(1-$\rho$(P)) x fat density in $e^{-H \cdot \mu abs(P,E)}$

| | | |
|---|---|---|
| $\mu$abs (P,E) : | Absorption coefficient at point P, at energy E | |

$= d(P) [\rho(P) \times \tau^{abs} \text{ (glandular tissue, E)} + (1-\rho(P)) \times \tau^{abs} \text{ (fat, E)}]$

with $\tau^{abs}$ being the mass absorption coefficients

H :  Height of breast compression

z :  Position on the column

$\theta$ :  Angle between $\overrightarrow{u(Q)}$ et $\overrightarrow{QM}$

$\dfrac{d\tau \text{ soft}}{d\Omega}(E,\theta)$ :  Differential mass macroscopic effective section of glandular tissue scatter

L :  Breast-detector distance

P :  Point of plane which generates scatter

**8.** Process in accordance with claim 7, in which the object is modelled in cylinder form whose base is its projection on the detector and whose axis is the direction of radiation, made up of small cylindrical columns whose base is the detector pixels and whose axis is the direction of radiation.

**9.** Process in accordance with claim 7, in which the mass absorption and scatter coefficients are determined energy by energy.

**10.** Process in accordance with claim 7, in which the coherent and incoherent scatter coefficients, corrected for shape factor, are used for primary components, the coefficients for each column being obtained by linear combination of these primary components in their respective proportion.

**11.** Process in accordance with claim 7, in which the quantitative map is built in the following manner:

- an energy model is built by calibration of the acquisition system;

- the proportion of total scatter is evaluated according to object type;

- the proportion of scatter of order 1 is evaluated for this object type;

- the proportion of higher order scatter is deduced therefrom; the difference thus built is removed from the energy map, this new map being called the map of primary energy + scatter of order 1;

- the primary energy + scatter of order 1 map is defined as initialization of primary energy;

- a map of mass proportions is built, using this map of primary energy;

- by calculating functions and using convolutions, scatter energy is evaluated using this proportion map;

- a new map of primary energy is obtained by subtracting this map of scatter energy from the map of primary energy + scatter of order 1;

- return to stage six above;

and in which, after a few iterations, convergence is made towards the map of primary energy, and in which on the basis of this map an image of the object is built.

FIG. 1

FIG. 2

FIG. 3

RADIOGRAPHIE

```
CONNAISSANCE          SEGMENTATION TROIS DIMENSIONS
   A PRIORI           DE L'OBJET EN ZONES HOMOGENES
 DE L'OBJET           VIS-A-VIS DE L'ENERGIE DU FLUX
                                  DIFFUSE
```

```
           1ERE ESTIMATION DE L'ENERGIE DU
         FLUX PRIMAIRE  (PAR EXEMPLE L'ENERGIE
                   DU FLUX OBSERVE)
```

```
         EPANDAGE SUR LES ZONES SEGMENTEES,
                   PAR RETROPROJECTION
           DE  L'ATTENUATION CORRESPONDANT A
              L'ENERGIE DU FLUX PRIMAIRE
```

```
         APPLICATION DU MODELE DE DIFFUSION
         ENERGIE DU FLUX DIFFUSE = F(ENERGIE DU
                   FLUX PRIMAIRE)
```

```
              INVERSION DE L'EQUATION
       ENERGIE DU FLUX OBSERVE = ENERGIE DU
         FLUX PRIMAIRE + F (ENERGIE DU FLUX
                     PRIMAIRE)
```

```
                   ENERGIE
                DU FLUX PRIMAIRE
```

FIG. 4

HAUTEUR
DE
COMPRESSION

DETECTEUR

FIG. 5

COEFFICIENT D'ABSORPTION $\mu$ (CM-1)

FIG. 6

COEFFICIENT DE DIFFUSION $\mu$(CM-1)

FIG. 7

PHOTONS/mAs/str

FIG. 8

ENERGIE EN KeV

ENERGIE PRIMAIRE/str(UNITE ARBITRAIRE)

FIG. 9

RAPPORT MASSIQUE DE TISSU MOU